# EUROPEAN PATENT APPLICATION

(11) **EP 2 667 600 A1**
(43) Date of publication of application: **27.11.2013**
(21) Application number: 12736293.7
(22) Date of filing: 10.01.2012
(51) Int. Cl.: H04N 7/173, H04N 5/44

(54) **DIGITAL RECEIVING DEVICE**

(30) Priority: 17.01.2011 JP 2011006591
(71) Applicant: Panasonic Corporation, Osaka 571-8501 (JP)
(72) Inventor: HARIMOTO, Shuji, Osaka-shi, Osaka 540-6207 (JP); YAMAMOTO, Shinji, Osaka-shi, Osaka 540-6207 (JP)
(74) Representative: Grünecker, Kinkeldey, Stockmair & Schwanhäusser
(86) International application number: PCT/JP2012/000074
(87) International publication number: WO 2012/098832

(57) **Abstract**

A first bit rate calculator of a digital receiving device receives incoming packet data including first and second packet data, and calculates a first bit rate of the incoming packet data. If the first bit rate is not greater than a predetermined threshold, the first bit rate calculator outputs the incoming packet data to an error corrector, the error corrector error-corrects the incoming packet and outputs the error-corrected incoming packet data, and the decoder decodes the incoming packet data output from the error corrector. If the first bit rate is greater than the predetermined threshold, the first bit rate calculator outputs the incoming packet data to the separator, the separator outputs residual packet data obtained by discarding the second packet data from the incoming packet data, the error corrector error-corrects the residual packet data and outputs the error-corrected residual packet data, and the decoder decodes the residual packet data output from the error corrector. This digital receiving device can reduce occurrence of delay in processing even if the bit rate of digital data increases.

## Description

### TECHNICAL FIELD

The present invention relates to a digital receiving device for receiving digital broadcast waves.

### BACKGROUND ART

In digital broadcasting, such as digital multimedia broadcasting (DMB) and integrated services digital broadcasting (ISDB) including digital radio broadcasting and digital television broadcasting, broadcast data compressed using highly-efficient compression algorithm, such as Moving Picture Expert Group (MPEG), is multiplexed for terrestrial or satellite transmission. Digital broadcast data in this digital broadcasting is divided into packets of data, such as video data and audio data, and compressed for transmission in multiplexed transport stream (TS). Each transport stream is combined and decompressed by a receiving device to select a predetermined program and is output after receive the processed audio or video data.

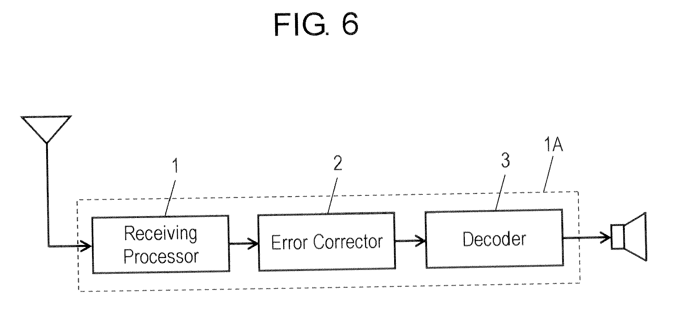

Fig. 6 is a block diagram of conventional digital receiving device 1A for processing digital incoming data. Digital receiving device 1A includes receiving processor 1, error corrector 2, and decoder 3.

In digital receiving device 1A, receiving processor 1 processes data received from broadcast waves to reproduce transport streams that are original packet data from multiplexed data. Then, error corrector 2 corrects errors in all the received packet data. Error corrector 2 corrects the errors when the number of the errors is not greater than a predetermined number in the received packet data, and outputs the packet data. Decoder 3 decodes the packet data output from error corrector 2 to reproduce sounds from the broadcast waves.

A conventional digital receiving device similar to digital receiving device 1A shown in Fig. 6 is disclosed, for example, in Patent Literature 1.

Conventional digital receiving device 1A may cause a delay in processing according to processing capability of a microcomputer as the increase of a bit rate of incoming digital broadcast waves, consequently outputting sound improperly.

### CITATION LIST

### PATENT LITERATURE

Patent Literature 1: Japanese Patent Laid-Open Publication No. 2005-73235

### NON-PATENT LITERATURE

Non-patent Literature 1: ISO/IEC 13818-1

### SUMMARY

A first bit rate calculator of a digital receiving device receives incoming packet data including first and second packet data, and calculates a first bit rate of the incoming packet data. If the first bit rate is not greater than a predetermined threshold, the first bit rate calculator outputs the incoming packet data to an error corrector, the error corrector error-corrects the incoming packet and outputs the error-corrected incoming packet data, and the decoder decodes the incoming packet data output from the error corrector. If the first bit rate is greater than the predetermined threshold, the first bit rate calculator outputs the incoming packet data to the separator, the separator outputs residual packet data obtained by discarding the second packet data from the incoming packet data, the error corrector error-corrects the residual packet data and outputs the error-corrected residual packet data, and the decoder decodes the residual packet data output from the error corrector.

This digital receiving device can reduce occurrence of delay in processing even if the bit rate of digital data increases.

### BRIEF DESCRIPTION OF DRAWINGS

Fig. 1 is a block diagram of a digital receiving apparatus including a digital receiving device in accordance with an exemplary embodiment.
Fig. 2 is a block diagram of a digital receiving apparatus including another digital receiving device in accordance with the embodiment.
Fig. 3 is illustrates a format of packet data of the digital receiving device in accordance with the embodiment.
Fig. 4 is a flow chart for illustrating an operation of the digital receiving device in accordance with the embodiment.
Fig. 5 is a flow chart for illustrating an operation of the digital receiving device in accordance with the embodiment.
Fig. 6 is a block diagram of a conventional digital receiving device.

### DETAIL DESCRIPTION OF PREFERRED EMBODIMENT

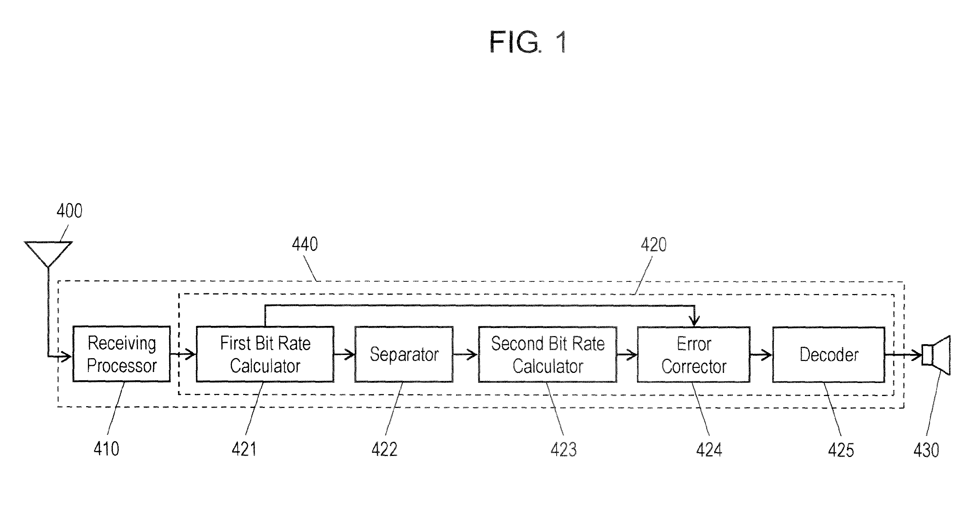

Fig. 1 is a block diagram of digital receiving apparatus 440 including digital receiving device 420 according to an exemplary embodiment. In the following description, known related components not directly affect the embodiment will not be detailed.

Digital receiving apparatus 440 includes antenna 400, receiving processor 410 connected to antenna 400, digital receiving device 420 connected to receiving processor 410, and loudspeaker 430 connected to digital receiving device 420.

Receiving processor 410 converts broadcast waves received via antenna 400 to packet data to obtain digital sounds, and outputs the packet data to digital receiving device 420. The packet data includes at least first packet data that is audio data and second packet data that is video data.

Digital receiving device 420 includes bit rate calculator 421, separator 422 connected to bit rate calculator 421, bit rate calculator 423 connected to separator 422, error corrector 424 connected to bit rate calculators 421 and 423, and decoder 425 connected to error corrector 424.

Conventional digital receiving device 1A shown in Fig. 1A corrects errors in all the received packet data. Since error-correction load is high, delay in processing occurs, depending on processing capability of microcomputer, as a bit rate of incoming digital broadcast wave increases. This may result in improper output of sounds.

Digital processing is a rapidly advancing field, and error correction is increasingly adopted in the form of software, so as to support changes in line with advancement. Changes can be supported by the use of software for correcting errors. However, processing capability of microcomputer cannot be changed. Therefore, a high-cost microcomputer with high processing capability needs to be selected if processing load increases. If this type of microcomputer is not selected, update is not feasible by the use of software.

Digital receiving device 420 according to the embodiment can efficiently obtain audio data from packet data output from receiving processor 410 even if a microcomputer with low processing capability is used. An operation of digital receiving device 420 will be described below.

Bit rate calculator 421 calculates a bit rate of packet data output from receiving processor 410, and determines, based on calculated bit rate, whether or not error corrector 424 can error-correct the packet data, i.e., can correct errors in the packet data, within a predetermined time. If bit rate calculator 421 determines that error corrector 424 can error-correct all the packet data output from receiving processor 410 within the predetermined time, bit rate calculator 421 outputs the packet data to error corrector 424 without outputting the data to separator 422. If bit rate calculator 421 determines that error corrector 424 cannot error-correct all the packet data output from receiving processor 410 within the predetermined time, bit rate calculator 421 outputs the packet data to separator 422 without outputting the data to error corrector 424.

Separator 422 discards packet data including the second packet data that is video data in the packet data output from bit rate calculator 421, and outputs, to bit rate calculator 423, residual packet data other than the discarded packet data. The residual packet data includes the first packet data that is audio data.

Bit rate calculator 423 calculates a bit rate of the residual packet data including the first packet data that is audio data, and determines, based on the calculated bit rate, whether or not error corrector 424 can error-correct all the residual packet data within a predetermined time. If bit rate calculator 423 determines that error corrector 424 can error-correct all the residual packet data, bit rate calculator 423 outputs all the residual packet data to error corrector 424. If bit rate calculator 423 determines that not all the residual packet data can be error-corrected within the predetermined time, bit rate calculator 423 discards the residual packet data, and does not output the residual packet data to error corrector 424.

Error corrector 424 error-corrects only the residual packet data not discarded by the above processing. Then, decoder 425 converts the error-corrected packet data to audio data for reproducing digital sounds. The discarded residual packet data is not sent to error corrector 424, and thus error corrector 424 does not error-correct the discarded residual packet data. Accordingly, digital receiving device 420 can suppress a delay in processing by error corrector 424 even if an inexpensive microcomputer with low processing capability is used as error corrector 424.

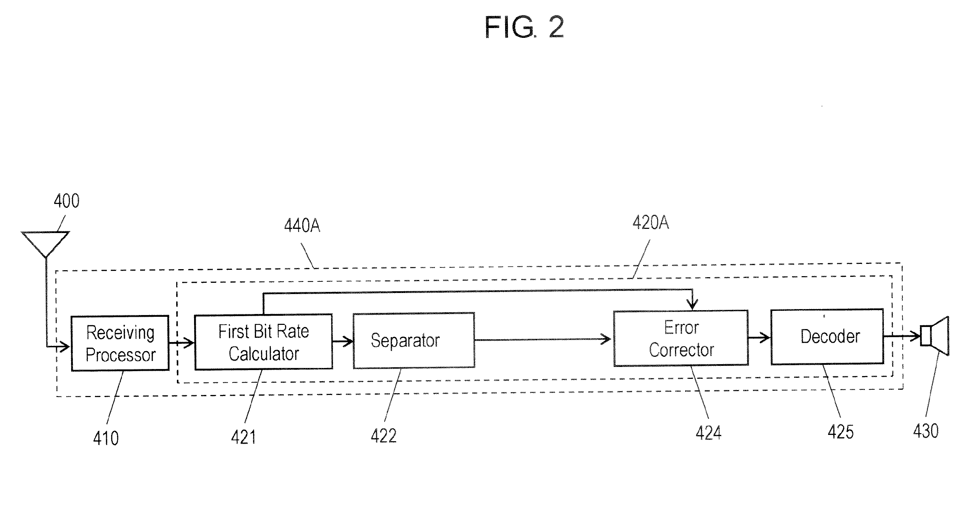

Fig. 2 s a block diagram of digital receiving apparatus 440A including another digital receiving device 420A according to the embodiment. In Fig. 2, components identical to those of digital receiving apparatus 440 shown in Fig. 1 are denoted by the same reference numerals. In digital receiving processor 420 shown in Fig. 1, bit rate calculator 423 is connected between separator 422 and error corrector 424. Digital receiving device 420A shown in Fig. 2 includes bit rate calculator 423 connected not between separator 422 and error corrector 424, and does not include bit rate calculator 423. If it is estimated that throughput of error correction is not so large in the second packet data that is audio data, digital receiving device 420A may be used instead of digital receiving device 420 shown in Fig. 1. In digital receiving device 420A, error corrector 424 error-corrects all the residual packet data. This provides digital receiving device 420A with a small circuit size, a small size and, small power consumption.

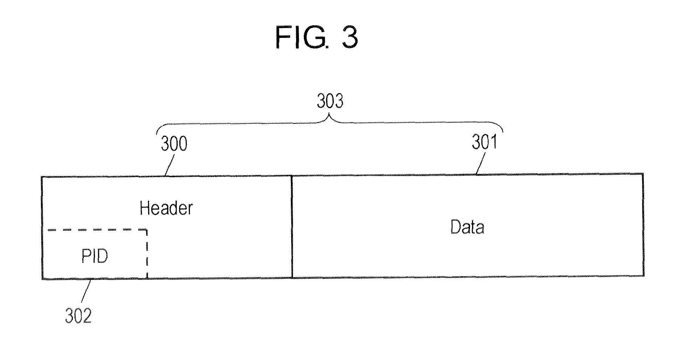

Fig. 3 illustrates a format of packet data 303 of digital receiving device 420 according to the embodiment. According to the embodiment, packet data 303 has a format specified by MPEG-2 standard. As shown in Fig. 3, in all types of packet data 303, packet data 303 includes header 300 and data 301 following header 300. Packet data 303 carries divided data obtained by dividing the data to be sent. Data 301 includes the divided data. Header 300 stores information on the divided data.

Data 301 changes according to the type of the packet data. If source data to be sent is audio data, data 301 stores divided data that is obtained by dividing the source data into data having a predetermined data length. If the source data to be sent is information packet data, data 301 stores a content of this information.

Header 300 stores packet identification (PID) 302 that is an identifier for identifying packet data 303.

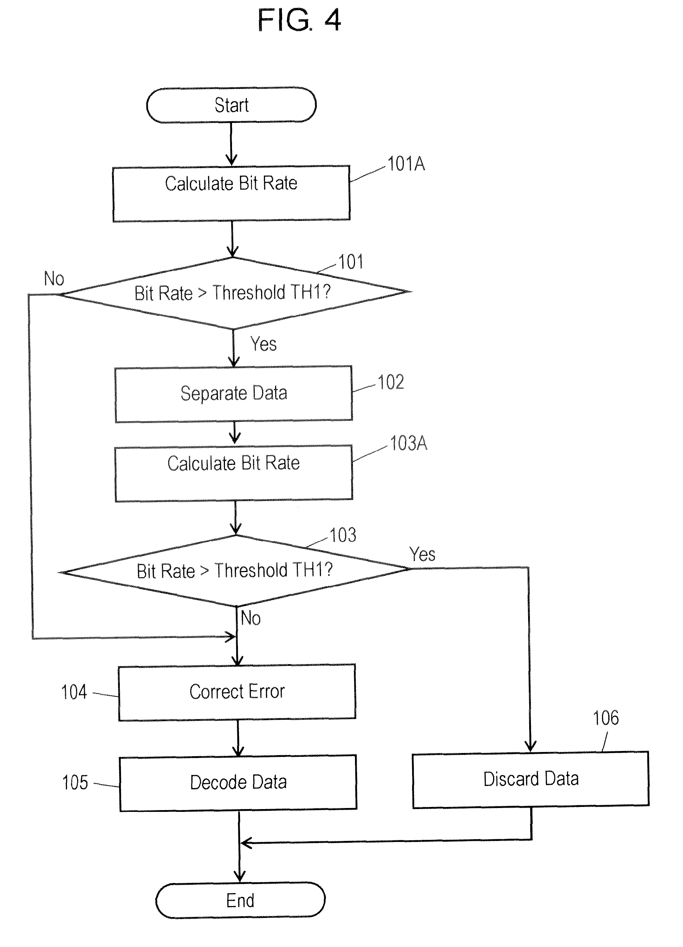

Fig. 4 is a flow chart illustrating an operation of digital receiving device 420. The operation of digital receiving device 420 shown in Fig. 1 is described with reference to Fig. 4. Bit rate calculator 421 calculates a bit rate of the packet data output from receiving processor 4 10 (Step 101A). Bit rate calculator 421 compares the calculated bit rate with predetermined threshold TH1 (Step 101), and determines whether or not all the packet data can be error-corrected within a predetermined time. Threshold TH1 is determined based on an overall processing load and capability of the microcomputer. Threshold TH1 is a reference for evaluating whether or not the bit rate causes a delay in processing.

More specifically, if the calculated bit rate is not greater than threshold TH1 at Step 101 ("No" at Step 101), error corrector 424 error-corrects the packet data (Step 104). For example, Reed-Solomon code can be used for error correction which means relatively busy processing load can be set. Decoder 425 decodes the packet data after the error correction, and converts the error-corrected packet data to audio data (Step 105).

If the calculated bit rate is greater than threshold TH1 in Step 101 ("Yes" at Step 101), bit rate calculator 421 outputs the packet data to separator 422. Separator 422 separates the packet data (Step 102). At Step 102, separator 422 discards packet data which is not required for reproducing digital sound, and outputs residual packet data required for reproducing digital sound to bit rate calculator 423. This operation reduces the size of the data, and reduces a load including error correction.

Bit rate calculator 423 calculates a bit rate of the residual packet data (Sep 103A), and compares the bite rate with threshold TH1 (Step 103). If the bit rate calculated at Step 103A is not greater than threshold TH1 ("No" at Step 103), bit rate calculator 423 outputs the residual data to error corrector 424. Error corrector 424 error-corrects the residual packet data (Step 104). Decoder 425 decodes the error-corrected residual packet data, and converts the residual data to audio data (Step 105).

If the bit rate calculated in Step 103A is greater than threshold TH1 ("Yes" in Step 103), bit rate calculator 423 discards the residual packet data and does not output the residual data to error corrector 424 (Step 106). Bit rate calculator 423 re-evaluates the bit rate calculated at Step 103A, using threshold TH1 used in Step 101, to determine whether or not a delay in processing occurs. If bit rate calculator 423 determines that a delay in processing occurs based on the evaluation results, processing ends at Step 106 without decoding the residual packet data. This operation avoids error correction using the microcomputer that may cause a delay in processing, thereby preventing actual delay in processing.

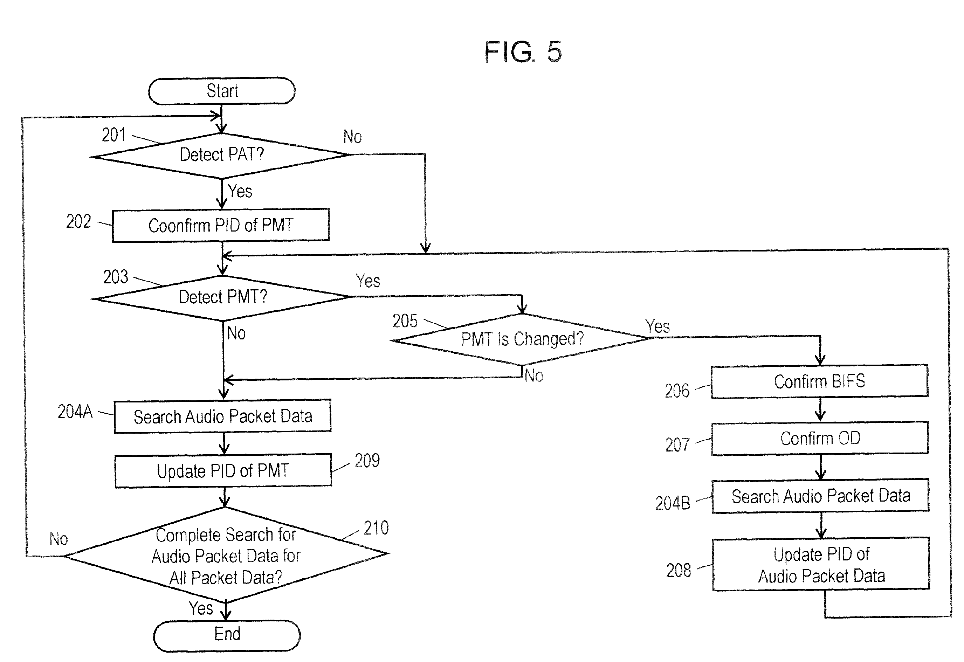

An operation of separator 422 for separating the packet data required for reproducing sound will be described below. Fig. 5 is a flow chart illustrating the operation of separator 422 of digital receiving device 420 according to the embodiment. Necessary packet data to be selected by the separation processing includes a packetized elementary stream (PES) of audio packet data that is a source of audio data, a program association table (PAT) of information packet data for identifying the PES, an object descriptor (OD), and a binary format for scenes (BIFS).

These terms are in accordance with ISO/IEC 13818-1 that is standards for an MPEG-2 system, and their functions are described later. These types of packet data can be identified by referring to PID 302 of packet data.

Separator 422 separates audio packet data by referring to data transferred by the above information packet data. As shown in Fig. 5, separator 422 determines, in the order of the data obtained, whether or not the obtained packet data is a PAT (Step 201). The searching of the PAT is started from the packet data first obtained. This operation enables separator 422 to obtain audio packet data even if the PMT and PID 302 required for a range of searches are changed simultaneously.

If the packet data is the PAT at Step 201 ("Yes" in Step 201), separator 422 refers to the content of the PAT, and confirms whether or not PID 302 for searching a PMT is changed (Step 202). To avoid updating PID 302 for detecting unsearched PMT and a PES that is audio packet data that exist before the PAT, separator 422 only confirms at Step 202 whether or not PID 302 is updated, and does not change PID 302. The timing for changing PID 302 for searching the PMT will be described later.

Separator 422 determines whether or not the packet data is the PMT. More specifically, separator 422 determines whether or not PID 302 of the packet data indicates that the packet data is the PMT (Step 203). The searching of the PMT starts from packet data in which the PMT is not searched, and completes at packet data before the packet data determined to be the PAT. Alternatively, the searching of PMT completes when the last packet data is searched within a search range is completed. This operation enables separator 422 to detect PMT even if PID 302 of the PMT is changed by the PAT.

If it is determined at Step 203, based on PID 302, that the packet data is not the PMT ("No" at Step 203), separator 422 confirms whether or not the packet data includes PID 302 indicating the PES that is audio packet data, so as to confirm whether or not the packet data is audio packet data (Step 204A). The searching of the PES that is audio packet data starts from packet data in which the PES that is audio packet data is not detected, and completes at packet data before the data determined to be the PMT. Alternatively, the searching of the PES completes when the last packet data obtained is searched within a search range. This operation enables the searching of the PES that is audio packet data in a range in which the PMT is valid.

If it is determined that the packet data is the PMT at Step 203 ("Yes" at Step 203), separator 422 refers to a content of the detected PMT, and confirms whether or not the PMT is changed (Step 205). Since the PMT is packet data that is sent at a constant period in accordance with the standards, the PMT may not be changed in its content. Accordingly, if no change is confirmed, separator 422 searches for the PES that is audio packet data at subsequent Step 204A.

If it is determined that the PMT is changed at Step 205 ("Yes" at Step 205), PID302 of the PES that is audio packet data may change at this moment. However, separator 422 does not update PID 302 for searching the PES that is audio data at this moment. Separator 422 only confirms the change.

If it is determined that the PMT is changed at Step 205 ("Yes" at Step 205), separator 422 confirms a BIFS in the packet data in order to promptly confirm a content of the OD to be referred to for confirming PID 302 of the PES that is audio packet data (Step 206). The BIFS is searched by referring to the content of the PMT that is changed and by detecting applicable PID 302. The searching of the BIFS starts from packet data next to the data including the changed PMT, and ends either when packet data before the packet data which is determined to be the next PMT is searched or when the last packet data obtained is searched. This operation enables to the search for the BIFS in a range in which a PMT with PID302 for search is valid.

Next, separator 422 confirms a content of the OD in order to confirm PID 302 of the PES that is audio packet data (Step 207). This search is executed by referring to the content of the changed PMT and detecting applicable PID 302, similarly to Step 200. When the change of the PMT is found by confirming PID 302 of PES that is audio packet data, a range to search using PID 302 before change remains in packet data where PES that is audio packet data is not yet searched. Accordingly, at Step 207, separator 422 does not update PID 302 of the PES that is audio packet data. The searching of the OD starts from the packet data next to the packet data with the changed PMT, and completes at packet data before the data determined to be the PAT or PMT. Alternatively, the searching may complete when the last packet data obtained is searched.

After confirming PID 302 of the PES that is audio packet data at Steps 205, 206, and 207, separator 422 searches for the PES that is audio packet data (Step 204B). After separator 422 completes the searching for the PES that is audio packet data at Step 204B, separator 422 updates PID 302 of the PES that is audio packet data confirmed at Steps 205 and 207 (Step 208). After updating PID 302 at Step 203, separator 422 searches for the PMT at Step 203.

If it is determined that the PMT is not changed at Step 205 ("No" at Step 205), separator 422 searches for audio packet data at Step 204A.

The above steps are repeated to complete the searching of the PMT and PES that is audio packet data up to packet data before the data having the PAT is detected at Step 201. This changes a valid range of the PMT due to the PAT, and thus, separator 422 updates PID 302 used for searching the PMT at Step 203 (Step 209). At Step 209, separator 422 changes PID 302 of the PMT to be searched next.

After updating PID 302 of the PMT at Step 209, separator 422 confirms whether or not the searching of the PES that is audio packet data is completed in all the packet data obtained (Step 210). If the search of PES that is audio packet data is completed at Step 210 in all packet data obtained ("Yes" at Step 210), separator 422 ends the separation processing.

If, at Step 210, there is still packet data in which the PES that is audio packet data is not searched ("No" at Step 210), the operation returns to Step 201, and separator 422 determines whether or not next packet data is the PAT.

As described above, in digital receiving device 420 according to the embodiment, separator 422 separates audio packet data for reproducing sound and information packet data for detecting this audio packet data from packet data received. This operation can reduce packet data error-corrected by error corrector 424. Accordingly, digital sound can be reproduced even if data with a high bit rate containing video images is received.

As described above, in digital receiving device 420 according to the embodiment, attributes of packet data are separated based on a bit rate of digital broadcast packet data in which enormous quantity of video data exists, in addition to audio data to be output, and data accompanying the packet data. The number of packet data is reduced to the number of data digital receiving device 420 can process. Digital receiving device 420 can thus appropriately process only required audio data by appropriately separating and discarding enormous quantity of video data that is not needed for reproducing sound. Accordingly, required processing capability can be extremely suppressed even if a microcomputer with low processing capability is used. Even if a bit rate of incoming data increases, digital sound can be reproduced.

In digital receiving device 420 according to the embodiment, bit rate calculator 423 discards packet data based on the bit rate of incoming packet data. However, digital receiving device 420 according to the embodiment is not limited to this operation. Error corrector 424 may calculate the number of errors per a predetermined time in the packet data. If the calculated number of the errors is smaller than a correction limit, error corrector 424 corrects the errors in the packet data. If the calculated number is greater than the correction limit, error corrector 424 may not correct errors in the packet data.

In ordinary digital broadcast receiving devices, standards specify error correction of both video signals and audio signals. It is common sense knowledge that errors in both signals are corrected. However, in digital receiving device 420 according to the embodiment, unlike ordinary digital receiving devices, video data is discarded before error correction. This can extremely suppress required processing capability also in a microcomputer with low processing capability. Digital sound can thus be reproduced even if a bit rate of incoming data increases.

### INDUSTRIAL APPLICABILITY

A digital receiving device according to the present invention can extract predetermined data, such as audio data, from data even if a bit rate is high, and is applicable to digital receiving devices using MPEG-2.

### REFERENCE MARKS IN THE DRAWINGS

- 410: Receiving Processor
- 420: Digital Receiving Device
- 421: Bit Rate Calculator (First Bit Rate Calculator)
- 422: Separator
- 423: Bit Rate Calculator (Second Bit Rate Calculator)
- 424: Error Corrector
- 425: Decoder

## Claims

1. A digital receiving device comprising:
a first bit rate calculator receiving incoming packet data including first packet data and second packet data, and calculating a first bit rate of the incoming packet data;
a separator connected to the first bit rate calculator;
an error corrector connected to the first bit rate calculator and the separator; and
a decoder connected to the error corrector.
wherein, if the first bit rate is not greater than a predetermined threshold, the first bit rate calculator outputs the incoming packet data to the error corrector, the error corrector error-corrects the output incoming packet and outputs the error-corrected incoming packet data, and the decoder decodes the incoming packet data output from the error corrector, and
wherein, if the first bit rate is greater than the predetermined threshold, the first bit rate calculator outputs the incoming packet data to the separator, the separator outputs residual packet data obtained by discarding the second packet data from the incoming packet data, the error corrector error-corrects the residual packet data and outputs the error-corrected residual packet data, and the decoder decodes the residual packet data output from the error corrector.

2. The digital receiving device of claim 1, further comprising
a second bit rate calculator connected between the separator and the error corrector, the second bit rate calculator calculating a second bit rate of the residual packet data output from the separator,
wherein, if the first bit rate is greater than the predetermined threshold and the second bit rate is not greater than the predetermined threshold, the residual packet data output from the separator is output to the error corrector, the error corrector error-corrects the residual packet data and outputs the error-corrected residual packet data, and the decoder decodes the residual packet data output from the error corrector, and
wherein, if the first bit rate and the second bit rate are greater than the predetermined threshold, the second bit rate calculator discards the residual packet data output from the separator, and the error corrector does not error-correct the residual packet data.

3. The digital receiving device of claim 1, wherein the error corrector is operable to:
calculate the number of errors in packet data,
correct the errors in the packet data if the calculated number is not greater than a correction limit, and
discard the packet data if the calculated number exceeds the correction limit.

4. The digital receiving device of claim 1, wherein the first packet data is an audio signal of digital broadcast, and the second packet data is a video signal of digital broadcast.
